# EUROPEAN PATENT SPECIFICATION

(11) **EP 3 023 041 B1**
(45) Date of publication and mention of the grant of the patent: **05.04.2017**
(21) Application number: 15193675.4
(22) Date of filing: 09.11.2015
(51) Int. Cl.: A47J 42/40

(54) **IMPROVED COFFEE GRINDING MACHINE**
VERBESSERTE KAFFEEMAHLMASCHINE
MACHINE DE MEULAGE DE CAFÉ AMÉLIORÉE

(30) Priority: 20.11.2014 IT MC20140103
(43) Date of publication of application: 25.05.2016
(73) Proprietor: Nuova Simonelli S.p.A., 62031 Belforte del Chienti (MC) (IT)
(72) Inventor: MERELLI, Francesco, 62010 POLLENZA (MC) (IT)
(74) Representative: Baldi, Claudio

(56) References cited:
- WO-A1-2012/138327
- AU-A1- 2012 209 041
- CN-Y- 201 223 317

## Description

The present patent application for industrial invention relates to an improved coffee grinding machine.

As it is known, a professional coffee machine uses a filter-holder with a filter that must be filled with one or two doses of ground coffee. Two factors are necessary in order to maintain the organoleptic characteristics of the coffee dispensed by the machine:
- coffee must be ground from beans immediately before being dispensed; and
- the quantity of ground coffee in the filter-holder must respect a predetermined weight according to the dose or doses.

In fact, coffee that was ground long ago will lose its aroma, and doses with an insufficient or exaggerated amount of ground coffee will generate a low-balance drink.

In order to solve these drawbacks, at least partially, coffee grinding machine are known, which comprise a grinder unit actuated by an electrical motor to grind coffee beans supplied from a container or hopper in order to dispense ground coffee inside the filter.

Generally speaking, these coffee machines comprise a button that can be manually pushed by the operator to actuate the electrical motor and the grinder unit and to dispense ground coffee.

However, said coffee grinding machines are impaired by some drawbacks.

In fact the quantity of ground coffee dispensed into the filter is empirically adjusted by the operator, who stops the dispensing of ground coffee according to his or her experience when he or she believes that the correct dose of ground coffee has been dispensed. Evidently, such an empirical adjustment is easily affected by mistakes and is often too approximate to guarantee the correct dispensing of an exact dose of coffee.

Automatic coffee grinding machines are known, wherein a predefined actuation time of the grinder unit motor, and consequently a predefined dispensing time of the ground coffee, is stored. Evidently, although such a type of coffee grinding machines releases the operator's from responsibility in terms of the correct dispensing of ground coffee, it is not very efficient or accurate due a plurality of incidental factors that affect the quantity of coffee dispensed during the actuation time of the grinder unit motor. The incidental factors may be the wear of the grinders, the friction between grinders, the cleanness of the grinder unit, and the hardness and dimensions of the coffee beans.

WO2012/138327 discloses a coffee grinding apparatus comprising a support platform and a load cell disposed outside the base structure, under the dispensing duct. The support platform is disposed above the load cell and is permanently fixed to a base portion of the load cell. The structure of the coffee grinding apparatus is impaired by the fact that the load cell must have a special configuration in order to be disposed in the support platform. Evidently, also the support platform must have a special annular configuration in order to receive the load cell. Moreover, the load cell is outside the frame of the apparatus and is subject to the action of foreign agents, such as the coffee powder that comes out of the filter and falls on the load cell. In addition to getting the load cell dirty, foreign agents can cause malfunctioning and inaccurate weighing operations of the load cell.

The purpose of the present invention is to remedy the drawbacks of the prior art by disclosing an automatic coffee grinding machine suitable for guaranteeing the dispensing of a correct dose of ground coffee.

Another purpose of the present invention is to provide such a coffee grinding machine that is precise and reliable.

These purposes are achieved according to the invention, with the characteristics claimed in the independent claim 1.

Advantageous embodiments of the invention will appear from the dependent claims.

The coffee grinding machine of the invention comprises:
- a grinder unit intended to grind coffee beans,
- a container, or hopper, used to feed coffee beans to the grinder unit;
- an electric motor connected to the grinder unit in order to actuate or stop said grinder unit; and
- a dispensing duct connected to the grinder unit to dispense coffee into a filter supported by a filter-holder;
- a support platform disposed under said dispensing duct and intended to support the filter-holder in such manner to dispense the ground coffee into the filter;
- a load cell connected to the support platform to weigh the quantity of ground coffee dispensed by the dispensing duct and contained in the filter of the filter-holder;
- a control unit electrically connected to the load cell to receive an indicative value of the weight of the ground coffee contained in the filter;
- a frame that contains the grinder unit, the electric motor and the control unit.

Said control unit comprises:
- a memory wherein a predefined weight value of ground coffee corresponding to one dose is stored; and
- comparison means that compare the weight of the ground coffee contained in the filter with the predefined value stored in the memory and send a control signal to the electric motor when the weight of the ground coffee contained in the filter reaches the predefined value stored in the memory, in such manner to stop the electric motor and consequently the grinder unit and the dispensing of ground coffee from the dispensing duct.

The load cell is disposed inside said frame. In this way the load cell is protected against external agents and is not affected by the ground coffee powder that can be poured from the filter or the dispensing duct.

The advantages of the coffee grinding machine of the invention are evident, wherein the load cell sends the weight of the ground coffee dispensed in the filter to the control unit so that the comparison means of the control unit can stop the electric motor and consequently, the grinder unit when the weight of the ground coffee dispensed inside the filter reaches the predefined value stored in the memory of the control unit.

In this way, the coffee grinding machine guarantees the correct filling of the filter, accurately measuring the weight of the ground coffee contained in the filter.

The fact that the load cell is protected inside the frame allows for using a load cell with any structure and a compact simple support platform, while guaranteeing the reliability and accuracy of the load cell.

Further characteristics of the invention will appear clear from the detailed description below, which refers to merely illustrative, not limiting, embodiments, illustrated in the attached drawings, wherein:

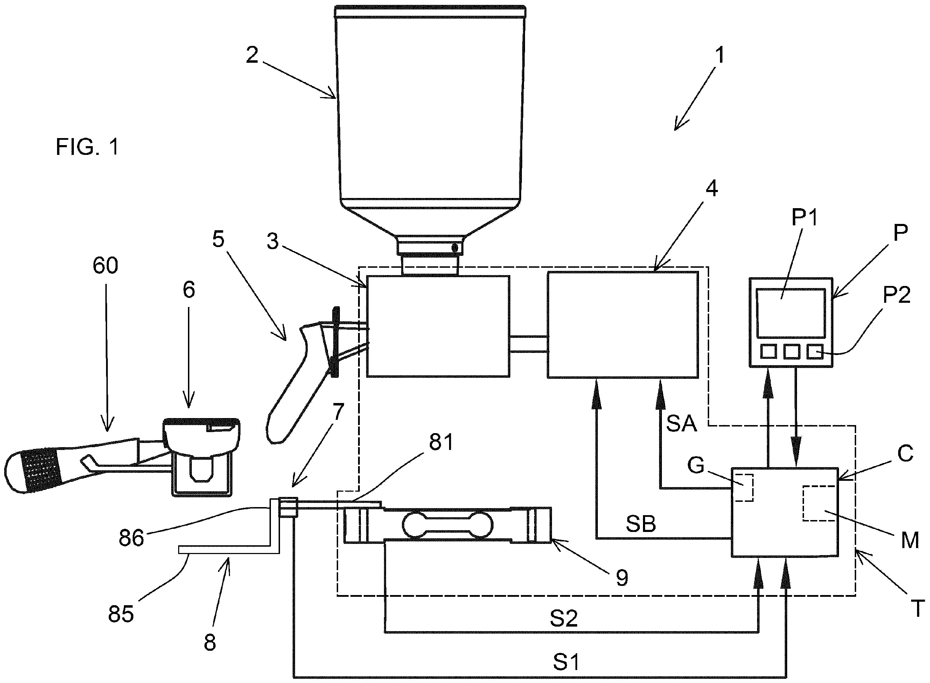

Fig. 1 is a diagrammatic view of the parts of a coffee grinding machine according to the invention.

With reference to Fig. 1, a coffee grinding machine according to the invention is disclosed, being comprehensively indicated with reference number (1).

The coffee grinding machine (1) comprises a container or hopper (2) used to feed coffee beans to a grinder unit (3) intended to grind the coffee beans. An electric motor (4) is connected to the grinder unit (3) in order to actuate or to stop said grinder unit (3). A dispensing duct (5) is connected to the grinder unit (3) to dispense ground coffee into a filter (6) supported by a filter-holder (60).

During the actuation of the electric motor (4) the coffee beans are ground by the grinder unit (3) and the ground coffee is dispensed by the dispensing duct (5). When the electric motor (4) is stopped, the dispensing of ground coffee from the dispensing duct (5) is stopped.

The coffee grinding machine (1) comprises a frame (T) that supports and contains the grinder unit (3) and the electric motor (4).

A support platform (8) that is shaped as a plate and disposed along a horizontal plane is positioned under the dispensing duct (5). The support platform (8) is intended to support the filter-holder (60) in such manner to dispense the ground coffee into the filter (6).

The support platform (8) is associated with a load cell (9).

The load cell (9) is suitable for weighing the quantity of ground coffee dispensed by the dispensing duct (5) and contained in the filter (6) of the filter-holder (60).

The load cell (9) is disposed inside the frame (T). In such a case, the support platform (8) is disposed outside the frame (T) and is connected to the load cell (9) by means of a connection bracket (81).

In particular, the support platform (8) has an L-shaped cross-section and comprises a base (85) and a side wall (86) connected to the connection bracket (81). The connection bracket (81) is shaped as a plate and extends from an upper edge of the side wall (86) of the support platform (8) in parallel position to the base (85) of the support platform (8). In view of the above, the weight of the ground coffee contained in the filter (6), which rests on the support platform (8), is transmitted to the load cell (9) through the connection bracket (81).

Although for illustrative purposes the figure depicts an L-shaped support platform (8) and a connection bracket (81) shaped as a plate or shelf, the support platform (8) and the connection bracket (81) can have a different shape.

The coffee grinding machine (1) comprises a control unit (C) electrically connected to the load cell (9) to receive an indicative value of the weight of the ground coffee contained in the filter (6).

The control unit (C) is disposed inside the frame (T) and comprises a memory (M) wherein a predetermined weight value of ground coffee corresponding to one dose or two doses or more doses Is stored.

The load cell (9) can be set according to the weight of the filter (6) and filter-holder (60) assembly in such manner to exactly detect the weight of the ground coffee contained in the filter (6). Alternatively, the load cell (9) is not set and directly detects the weight of the filter (6) and filter-holder (60) assembly plus the weight of the ground coffee contained in the filter (6). In such a case, the weight of the filter (6) and filter-holder (60) assembly is stored in the memory (M) of the control unit (C), and s to be subtracted from the weight detected by the load cell (9) in order to obtain the weight of the ground coffee contained in the filter (6).

Considering that a small quantity of ground coffee keeps on being dispensed by the dispensing duct (5) when the grinder unit (3) is stopped, the load cell (9) can be set at a weight that is slightly lower than one coffee dose, taking into account the quantity of ground coffee dispensed by the dispensing duct (5) inside the filter (6) after stopping the grinder unit (3).

Moreover, the control unit (C) comprises comparison means (G) that compare the coffee weight detected by the load cell (9), which corresponds to the coffee contained in the filter (6), with the predefined value stored in the memory (M) and send a stop signal (S_{A}) to the electric motor (4) when the weight of the ground coffee contained in the filter (6) reaches the predefined value stored in the memory (M). The stop signal (S_{A}) stops the electric motor (4) and, consequently, the grinder unit (3) and the dispensing of ground coffee from the dispensing duct (5).

The coffee grinding machine (1) optionally comprises a presence sensor (7) disposed in proximity to the support platform (8) to detect a correct position of the filter-holder (60) on the support platform (8). The presence sensor (7) is electrically connected to the control unit (C).

The presence sensor (7) is advantageously a proximity switch that sends an ON-OFF signal to the control unit (C).

Alternatively or additionally to the presence sensor (7), the coffee grinding machine (1) comprises a manual actuation button connected to a switch to start the grinder unit (3).

The coffee grinding machine (1) also comprises a control panel (P) electrically connected to the control unit (C). The control panel (P) comprises a display (P1) and a push-button panel (P2). The display (P1) is used to display the weight of the ground coffee detected by the load cell (9). The push-button panel (P2) is used to change the predefined weight value of the coffee ground stored in the memory (M) of the control unit (C).

Following is a description of the operation of the coffee grinding machine (1).

When the filter-holder (60) is correctly disposed on the support platform (8), the presence sensor (7) sends a control signal (S1) to the control unit (C) and the control unit (C) sends a start signal (S_{B}) to the electric motor (4) to actuate the electric motor (4) and the grinder unit (3).

The grinder unit (3) starts grinding the coffee beans fed from the container (2) and the ground coffee is dispensed inside the filter (6) through the dispensing duct (5).

While the ground coffee is dispensed inside the filter (6), the load cell (9) sends a signal (S2) indicative of the weight of the ground coffee contained in the filter (6) to the control unit (C)

The comparison means (G) compare the signal (S2) received from the load cell, which is indicative of the weight of the ground coffee contained in the filter (6), with the predefined value stored in the memory (M) and send a stop signal (S_{A}) to the electric motor (4) when the weight of the ground coffee contained in the filter (6) reaches the predefined value stored in the memory (M) in such manner to stop the electric motor (4) and consequently the grinder unit (3) and the dispensing of ground coffee from the dispensing duct (5).

## Claims

1. A coffee grinding machine (1) comprising:
- a grinder unit (3) intended to grind coffee beans,
- a container or hopper (2) to feed the coffee beans to the grinder unit (3);
- an electric motor (4) connected to the grinder unit (3) in order to actuate or stop said grinder unit (3);
- a dispensing duct (5) connected to the grinder unit (3) to dispense coffee into a filter (6) supported by a filter-holder (60);
- a support platform (8) disposed under said dispensing duct (5) and intended to support the filter-holder (60) in such manner to dispense the ground coffee into the filter (6);
- a load cell (9) connected to the support platform (8) to weigh the quantity of ground coffee dispensed from the dispensing duct (5) and contained into the filter (6) of the filter-holder (60);
- a control unit (C) electrically connected to the load cell (9) to receive an indicative value of the weight of the ground coffee contained in the filter (6),
- a frame (T) that contains the grinder unit (3), the electric motor (4) and the control unit (C).
wherein said control unit (2) comprises:
- a memory (M) wherein a predefined weight value of ground coffee that corresponds to one dose is stored; and
- comparison means (G) that compare the weight of the ground coffee contained in the filter (6) with the predefined value stored in the memory (M) and send a stop signal (S_{A}) to the electric motor (4) when the weight of the ground coffee contained in the filter (6) reaches the predefined value stored in the memory (M) in such manner to stop the electric motor (4) and consequently the grinder unit (3) and the dispensing of ground coffee from the dispensing duct (5),
**characterized in that**
said load cell (9) is disposed inside said frame (T).

2. The coffee grinding machine (1) of claim 1, wherein said support platform (8) is disposed outside the frame (T) and connected to the load cell (9) by means of a connection bracket (81).

3. The coffee grinding machine (1) of claim 2, wherein said support platform (8) has an L-shaped cross-section and comprises a base (85) and a side wall (86) connected to said connection bracket (81) and said connection bracket (81) is shaped as a plate and extends from an upper edge of the side wall (86) of the support platform (8) in parallel position to the base (85) of the support platform (8).

4. The coffee grinding machine (1) of any one of the preceding claims, also comprising a presence sensor (7) disposed in proximity to the support platform (8) and electrically connected to the control unit (C), said presence sensor being intended to detect the correct position of the filter-holder (60) on the support platform (8).

5. The coffee grinding machine (1) of claim 4, wherein said presence sensor (7) is a proximity switch.

6. The coffee grinding machine (1) of any one of the preceding claims, also comprising a control panel (P) electrically connected to the control unit (C), said control panel (P) comprising a display (P1) and a push-button panel (P2), respectively used to display the weight of the ground coffee detected by the load cell (9) and to modify the predefined weight value of ground coffee stored in the memory (M) of the control unit (C).

7. The coffee grinding machine (1) of any one of the preceding claims, wherein the load cell (9) is set in such manner to detect a quantity of ground coffee that is slightly lower than one dose, in consideration of the quantity of ground coffee dispensed from the dispensing duct (5) into the filter (6) after stopping the grinder unit (3).

## Patentansprüche

1. Kaffeemühle (1), umfassend:
- ein Mahlwerk (3), das dazu geeignet ist, Kaffeebohnen zu mahlen,
- einen Behälter oder Schütttrichter (2) zum Zuführen der Kaffeebohnen in das Mahlwerk (3);
- einen Elektromotor (4), der mit dem Mahlwerk (3) derart verbunden ist, dass das Mahlwerk (3) betätigt oder gestoppt wird;
- eine Ausgabeleitung (5), die mit dem Mahlwerk (3) verbunden ist, zur Ausgabe des Kaffees in einen Filter (6), der von einem Filterhalter (60) getragen wird;
- eine Stützplatte (8), die unter der Ausgabeleitung (5) angeordnet und dazu geeignet ist, den Filterhalter (60) derart zu tragen, dass der gemahlene Kaffee in den Filter (6) ausgegeben wird;
- eine Wägezelle (9), die mit der Stützplatte (8) verbunden ist, um die Menge des gemahlenen Kaffees zu wiegen, der von der Ausgabeleitung (5) ausgegeben wird und im Filter (6) des Filterhalters (60) enthalten ist;
- eine Steuereinheit (C), die elektrisch mit der Wägezelle (9) verbunden ist, um einen Richtwert des Gewichts des im Filter (6) enthaltenen, gemahlenen Kaffees zu empfangen,
- einen Rahmen (T), der das Mahlwerk (3), den Elektromotor (4) und die Steuereinheit (C) enthält,
wobei die Steuereinheit (C) Folgendes umfasst:
- einen Speicher (M), in dem der vorbestimmte, einer Dosis entsprechende Gewichtswert des gemahlenen Kaffees gespeichert ist; und
- eine Vergleichseinrichtung (G), die das Gewicht des im Filter (6) enthaltenen, gemahlenen Kaffees mit dem im Speicher (M) gespeicherten, vorbestimmten Wert vergleicht und ein Stoppsignal (S_{A}) an den Elektromotor (4) sendet, wenn das Gewicht des im Filter (6) enthaltenen, gemahlenen Kaffees den im Speicher (M) gespeicherten, vorbestimmten Wert erreicht, derart, dass der Elektromotor (4) und demzufolge das Mahlwerk (3) und die Ausgabe des gemahlenen Kaffees aus der Ausgabeleitung (5) gestoppt werden,
**dadurch gekennzeichnet, dass**
die Wägezelle (9) in dem Rahmen (T) angeordnet ist.

2. Kaffeemühle (1) nach Anspruch 1, wobei die Stützplatte (8) außerhalb des Rahmens (T) angeordnet und (9) mittels eines Verbindungsbügels (81) mit der Wägezelle (9) verbunden ist.

3. Kaffeemühle (1) nach Anspruch 2, wobei die Stützplatte (8) im Querschnitt L-förmig ist und eine Basis (85) sowie eine Seitenwand (86) umfasst, die mit dem Verbindungsbügel (81) verbunden ist, und wobei der Verbindungsbügel plattenförmig ist und sich von einer oberen Kante der Seitenwand (86) der Stützplatte (8) in eine parallel zur Basis (85) der Stützplatte (8) angeordnete Stellung erstreckt.

4. Kaffeemühle (1) nach einem beliebigen der vorstehenden Ansprüche, umfassend einen Präsenzsensor (7), der in der Nähe der Stützplatte (8) angeordnet und elektrisch mit der Steuereinheit (C) verbunden ist, wobei der Präsenzsensor dazu geeignet ist, die korrekte Stellung des Filterhalters (60) auf der Stützplatte (8) zu erfassen.

5. Kaffeemühle (1) nach Anspruch 4, wobei der Präsenzsensor (7) ein Näherungsschalter ist.

6. Kaffeemühle (1) nach einem beliebigen der vorstehenden Ansprüche, umfassend ferner ein Bedienfeld (P), das elektrisch mit der Steuereinheit (C) verbunden ist, wobei das Bedienfeld (P) ein Display (P1) und eine Drucktastenplatte (P2) umfasst, die jeweils zur Anzeige des von der Wägezelle (9) erfassten Gewichts des gemahlenen Kaffees bzw. zum Ändern des vorbestimmten Gewichtswerts des gemahlenen Kaffees verwendet wird, der im Speicher (M) der Steuereinheit (C) gespeichert ist.

7. Kaffeemühle (1) nach einem beliebigen der vorstehenden Ansprüche, wobei die Wägezelle (9) derart geeicht ist, dass eine Menge an gemahlenem Kaffee erfasst wird, die etwas geringer als eine Dosis ist, wobei die Menge des gemahlenen Kaffees berücksichtigt wird, der nach dem Stopp des Mahlwerks (3) von der Ausgabeleitung (5) in den Filter (6) ausgegeben wird.

## Revendications

1. Machine pour la mouture du café (1) comprenant :
- un groupe de broyeurs (3) apte à mouler les grains de café,
- un récipient ou trémie (2) pour alimenter les grains de café au groupe de broyeurs (3) ;
- un moteur électrique (4) branché au groupe de broyeurs (3) de façon à actionner ou arrêter ledit groupe de broyeurs (3) ;
- un conduit de débit (5) connecté au groupe de broyeurs (3) pour la distribution de café dans un filtre (6) supporté par un porte-filtre (60) ;
- une plate-forme de support (8) disposée sous ledit conduit de débit (5) et apte à supporter le porte-filtre (60), de manière à ce que le café moulu soit distribué dans le filtre (6) ;
- une cellule de chargement (9) connectée à la plate-forme de support (8) pour peser la quantité de café moulu distribué par le conduit de débit (5) et contenu dans le filtre (6) du porte-filtre (60) ;
- un module électronique (C) branché électriquement à la cellule de chargement (9) pour recevoir une valeur indicative du poids du café moulu contenu dans le filtre (6),
- un châssis (T) qui contient le groupe de broyeurs (3), le moteur électrique (4) et le module électronique (C),
où ledit module électronique (C) comprend :
- une mémoire (M) dans laquelle une valeur préfixée du poids du café moulu, correspondante à une dose, est enregistrée ; et
- des moyens de comparaison (G) qui comparent le poids du café moulu contenu dans le filtre (6) avec la valeur préfixée enregistrée dans la mémoire (M) et qui envoient un signal d'arrêt (S_{A}) au moteur électrique (4), quand le poids du café moulu contenu dans le filtre (6) atteint la valeur préfixée enregistrée dans la mémoire (M), de façon à arrêter le moteur électrique (4) et donc le groupe de broyeurs (3) et la distribution de café moulu via le conduit de débit (5),
**caractérisée en ce que**
ladite cellule de chargement (9) est disposée dans ledit châssis (T).

2. Machine pour la mouture du café (1) selon la revendication 1, où ladite plate-forme de support (8) est disposée à l'extérieur du châssis (T) et connectée à la cellule de chargement (9) moyennant une bride de raccordement (81).

3. Machine pour la mouture du café (1) selon la revendication 2, où ladite plate-forme de support (8) a une forme en « L » en section transversale et comprend une base (85) et une paroi latérale (86) connectée à ladite bride de raccordement (81) et ladite bride de raccordement (81) a la forme d'une plaque et se déploie depuis un bord supérieur de la paroi latérale (86) de la plate-forme de support (8), en se disposant parallèle à la base (85) de la plate-forme de support (8).

4. Machine pour la mouture du café (1) selon l'une quelconque des revendications précédentes, comprenant également un capteur de présence (7) placé à proximité de la plate-forme de support (8) et branché électriquement au module électronique (C), ledit capteur de présence étant apte à relever le positionnement correct du porte-filtre (60) sur la plate-forme de support (8).

5. Machine pour la mouture du café (1) selon la revendication 4, où ledit capteur de présence (7) est un interrupteur de proximité.

6. Machine pour la mouture du café (1) selon l'une quelconque des revendications précédentes, comprenant en outre un tableau de bord (P) branché électriquement au module électronique (C), ledit tableau de bord (P) comprenant un afficheur (P1) et un clavier (P2), pour respectivement visualiser le poids du café moulu relevé par la cellule de chargement (9) et modifier la valeur préfixée de poids de café moulu enregistrée dans la mémoire (M) du module électronique (C).

7. Machine pour la mouture du café (1) selon l'une quelconque des revendications précédentes, où la cellule de chargement (9) est échantillonnée de manière à relever une quantité de café moulu légèrement inférieure par rapport à une dose, en prenant en compte la quantité de café moulu distribué par le conduit de débit (5) dans le filtre (6) après l'arrêt du groupe de broyeurs (3).
